# EUROPÄISCHE PATENTSCHRIFT

(11) **EP 2 067 071 B1**
(45) Veröffentlichungstag und Bekanntmachung des Hinweises auf die Patenterteilung: **31.10.2012**
(21) Anmeldenummer: 07817474.5
(22) Anmeldetag: 10.09.2007
(51) Int. Cl.: G03B 17/56, G03B 11/00, G03B 17/08, G02B 7/00, G02B 27/00

(54) **LINSENVORSATZVORRICHTUNG, INSBESONDERE LINSENSCHUTZVORRICHTUNG**
LENS ADAPTER DEVICE, PARTICULARLY LENS PROTECTING DEVICE
DISPOSITIF ADDITIONNEL POUR OBJECTIF, EN PARTICULIER DISPOSITIF DE PROTECTION D'OBJECTIF

(30) Priorität: 08.09.2006 DE 102006042793
(43) Veröffentlichungstag der Anmeldung: 10.06.2009
(73) Patentinhaber: Ambrozic, Ivo, 80939 München (DE)
(72) Erfinder: Ambrozic, Ivo, 80939 München (DE)
(74) Vertreter: Kronthaler, Wolfgang N.K.
(86) Internationale Anmeldenummer: PCT/DE2007/001600
(87) Internationale Veröffentlichungsnummer: WO 2008/028479

(56) Entgegenhaltungen:
- WO-A-91/02284
- DE-A1- 2 901 982
- DE-A1- 3 523 039
- GB-A- 2 359 899
- JP-A- 57 024 969
- US-A- 2 298 063
- US-A1- 2004 184 799
- US-A1- 2005 169 628

## Beschreibung

### GEBIET DER ERFINDUNG

Die Erfindung betrifft eine Linsenvorsatzvorrichtung, insbesondere eine Linsenschutzvorrichtung zum Schutz vor anfliegenden Teilchen wie Regen oder Schnee, nach der im Oberbegriff des Patentanspruches 1 näher definierten Art.

### STAND DER TECHNIK

Der Einsatz von Kameras und insbesondere Filmkameras erfolgt häufig unter ungünstigen Bedingungen, bei denen die Kameralinse z. B. vor einem Anhaften anfliegender Teilchen wie Regentropfen, Schneeflocken oder auch Mücken zur Gewährleistung einer ausreichenden Bildqualität geschützt werden muss.

Aus der Praxis ist es bekannt, hierzu eine sich schnell drehende Glasscheibe vor die Linse zu platzieren, so dass sämtliche anfliegenden Teilchen durch die von der drehenden Glasscheibe erzeugte Zentrifugalkraft in Richtung des Umfangs der Scheibe weggeschleudert werden und damit die Bildqualität nicht weiter beeinträchtigen.

Eine solche Zentrifugal-Linsenschutzvorrichtung ist z. B. aus dem US-Patent 3,879,742 bekannt, bei sich eine Überwachungskamera in einem wetterfesten Gehäuse mit einer drehbaren Scheibe befindet.

Das US-Patent 5,223,880 beschreibt ein Zubehörteil für Kameras in der Art einer Zentrifugal-Linsenschutzvorrichtung, wobei die Scheibe mit einem Rotor eines Magnetmotors als Einheit ausgebildet ist, welche am freien Ende des Objektivs befestigt wird.

Das US-Patent 5,315,333 zeigt die Anbringung einer rotierenden Scheibe über Träger an einem Kameragehäuse, so dass die Scheibe vor der Kamera angeordnet, aber nicht mit dieser verbunden ist.

Eine weitere derartige Anordnung einer rotierenden Scheibe vor der Linse ist in dem US-Patent 6,731,867 offenbart.

Nachteilig bei allen diesen Linsenschutzvorrichtungen ist jedoch, dass der Einsatz bei weiteren Linsenvorsätzen, insbesondere eines Kompendiums, erschwert ist und dass teilweise erhebliche, zeitaufwändige Umbauarbeiten bei einem Wechsel eines optischen Linsenvorsatzes wie z. B. eines Filters nötig sind.

Ein Beispiel für ein Kompendium für eine Filmkamera ist in der DE 35 23 039 A1 gezeigt, wobei ein Rahmen zur Verbindung mit der Kamera vor dem Objektiv, eine Lichtabschirmung zum Eingriff mit dem Kameraobjektiv und mindestens ein zwischen dem Rahmen und der.Lichtabschirmung angeordneter Filter vorgesehen sind. Mehrere Filterhaltemodule sind mit zusammenpassenden Schwalbenschwanzschlitzen an ihren vorderen und hinteren Flächen versehen, um ein schnelles Zusammenbauen und Lösen irgendeiner Anzahl und irgendeiner Art Filterhaltemodule und ein Verbinden mit dem Rahmen zu ermöglichen. An jedem Modul ist lösbar ein Verriegelungsmechanismus vorgesehen, um jedes Modul mit dem benachbarten Modul ausgerichtet und in der richtigen Stellung zu halten.

Ein Weiteres auch als Matte-Box bezeichnetes Kompendium, welches modular aufgebaut ist, ist aus dem deutschen Gebrauchsmuster DE 20 2005 004 067 01 bekannt. Dieses Kompendium weist ein Basiskompendium auf, bestehend aus einem Basiskompendiumträger, der auf seiner einen Seite mit einer Gegenlicht- oder Sonnenblende mit wahlweise feststehenden oder schwenkbaren Blendenflügeln verbunden ist, und an dessen Rückseite mehrere Filterhaltemodule angeordnet sind, die über Schnellbefestigungseinrichtungen an ihrer Vorder- und Rückseite miteinander und mit der Gegenlichtblende verbunden sind. Durch die Verbindung der einzelnen Filterhaltemodule über deren Vorder- und Rückseite kann die Anzahl der Filterhaltemodule bestimmt werden und es können einzelne Filterhaltemodule ausgetauscht oder vom Basiskompendium entfernt werden.

Weiterentwicklungen dieser Kompendien sind im Handel erhältlich, wobei nur beispielhaft ein unter dem Handelsnamen "ARRI MB-14" angebotenes Kompendium erwähnt sei.

### OFFENBARUNG DER ERFINDUNG

### TECHNISCHE AUFGABE

Es ist Aufgabe der vorliegenden Erfindung, eine Linsenvorsatzvorrichtung für eine Kamera, insbesondere zum Schutz vor anfliegenden Teilchen wie Regen oder Schnee, mit einer in Rotation versetzbaren Scheibe zu schaffen, wobei die Installation und der Betrieb der Vorrichtung bei weiteren Vorsatzbauelementen vor der Kameralinse, in der Art eines Kompendiums, weitestgehend vereinfacht ist.

### TECHNISCHE LÖSUNG

Diese Aufgabe wird erfindungsgemäß durch die Merkmale der Patentansprüche 1 und 2 gelöst.

Die Erfindung sieht somit vor, eine Linsenvorsatzvorrichtung, insbesondere eine Linsenschutzvorrichtung zum Schutz vor anfliegenden Teilchen wie Regen oder Schnee, für Kameras mit einer in Rotation versetzbaren Scheibe derart auszugestalten, dass die Scheibe in einem Halterahmen angeordnet ist, welcher als ein Einsatz eines Trägers für Bildeigenschaften beeinflussende Bauelemente vor einer Kameralinse ausgebildet ist.

### VORTEILHAFTE WIRKUNGEN

Dadurch, dass eine Linsenvorsatzvorrichtung mit einer in Rotation versetzbaren Scheibe, insbesondere zum Schutz vor anfliegenden Teilchen, als ein Kompendium- bzw. Matte-Box-Einsatz mit einem zum Einsatz in einen solchen Träger geeigneten Halterahmen ausgebildet ist, wird vorteilhafterweise sowohl die Installation als auch der Betrieb einer solchen Linsenvorsatzvorrichtung gegenüber bekannten Lösungen deutlich vereinfacht.

Der Halterahmen kann dabei die Form eines Filterrahmens haben bzw. eine drehbare Filterbühne darstellen, so dass die Linsensschutzvorrichtung optional in eine herkömmliche Trägervorrichtung bzw. ein Kompendium einsetzbar ist.

Die Linsenvorsatzvorrichtung nach der Erfindung ermöglicht durch Ihre Ausgestaltung als ein an beliebiger Stelle bei einem Kompendium an- bzw. einfügbares Modul den Verzicht auf aufwendige konstruktive Maßnahmen zur Umgehung eines solchen Kompendiums. Die Einsparung von entsprechenden Konstruktionsbauteilen wirkt sich weiterhin positiv auf ein geringes Gewicht des mit der erfindungsgemäßen Vorrichtung bestückten Kompendiums und somit der Kamera insgesamt aus.

Die Erfindung ermöglicht dabei die Gestaltung des Verbundes von Regenschutz und Filterträger mit einem Gewicht, welches annähernd die Hälfte des Gewichts herkömmlicher Konstruktionen beträgt.

Des Weiteren erlaubt sie einen schnellen Umbau von die Bildeigenschaften beeinflussenden Bauelementen vor der Kameralinse.

Mit einer mechanischen Verschlusseinrichtung für die Scheibe ist weiterhin eine einfache Reinigung möglich.

Auch ermöglicht die Erfindung den Einsatz vergleichsweise großer Durchmesser der rotierenden Scheibe, z. B. Scheiben mit einem Durchmesser von 118 mm an Stelle von 95 mm bei Lösungen aus dem Stand der Technik mit ansonsten vergleichbaren Rahmenbedingungen.

Besonders geeignet ist eine solche im Prinzip wie ein herkömmlicher Regenabweiser arbeitende, und z.B. mit 3000 bis 3500 Umdrehungen pro Minute rotierende Linsensschutzvorrichtung bei Filmkameras, jedoch ist sie auch bei Fotokameras, insbesondere so genannten Fachkameras, einsetzbar.

Zur Verwendung als reine Linsenschutzvorrichtung kann die Scheibe der erfindungsgemäßen Linsenvorsatzvorrichtung als eine neutrale Deckglasscheibe ausgebildet sein. Der Begriff "Glas" ist dabei wie in der gesamten vorliegenden Anmeldung in seinem weitesten Sinne als Material für eine wenigstens bereichsweise transparente Scheibe zu verstehen, wobei der Begriff "Glas" nicht auf mineralisches Glas beschränkt ist, sondern auch Kunststoffe umfasst.

Zusätzlich oder alternativ zu ihrer Funktion als Schutzelement kann die Scheibe jedoch auch als eine optische Wirkung hervorrufende Scheibe ausgebildet sein. Beispielsweise kann sie als ein optischer Filter wirken, welcher die einfallende Strahlung nach bestimmten Kriterien, z. B. nach der Wellenlänge, dem Polarisationszustand oder der Einfallsrichtung, selektiert.

Im Rahmen der Erfindung kann es auch vorgesehen sein, dass zwei oder mehr Scheiben in dem Halterahmen der erfindungsgemäßen Linsenvorsatzvorrichtung angeordnet sind.

Wenigstens eine dieser Scheiben kann dabei der Erzeugung optischer Effekte bei Ihrer Rotation dienen. Wenn zwei in einem Halterahmen angeordnete Scheiben jeweils als Polarisationsfilter ausgebildet sind, kann durch eine Verschränkung der in unterschiedliche Richtung drehenden Polarisationsfilter zueinander eine Blendenwirkung erzielt werden, welche bis zu einem Verschluss der Kameralinse bzw. einer absoluten Lichtdichtigkeit bei einer 90°-Verkreuzung der Polarisationsfilterscheiben gegeneinander reicht.

Der Antrieb der wenigstens einen Scheibe ist bei der erfindungsgemäßen Linsenvorsatzvorrichtung zweckmäßigerweise in den Halterahmen der Scheibe integriert bzw. an diesen angesetzt.

Bei einer sehr einfachen Ausführung der Erfindung ist der Antrieb mit einem Elektromotor ausgebildet, welcher über ein an dem Scheibenrand der rotierenden Scheibe abrollendes Rad die Scheibe antreibt.

Der Motor und der Antrieb der rotierenden Scheibe insgesamt wird vom Fachmann vorzugsweise je nach Aufgabe der rotierenden Scheibe ausgelegt, so dass bei Verwendung der rotierenden Scheibe als reines Schutzglas ein Motor mit besonders hoher Drehzahl gewählt werden kann, während bei einer Funktion der Scheibe als bildgestalterisches Element insbesondere die Positionsgenauigkeit der Scheibe von Bedeutung sein kann, so dass hier vorzugsweise ein geregelter Motor mit nach geordnetem Getriebe eingesetzt wird.

Während es bei einer einfachen Ausführung der erfindungsgemäßen Linsenvorsatzvorrichtung ausreichend sein kann, dass der Antrieb rein zur Stromversorgung mit der Kamera verbunden wird, kann in einer Weiterbildung der Erfindung insbesondere bei einer Scheibe mit optischer Wirkung vorgesehen sein, dass der Motor des Antriebs in Abhängigkeit von Ausgangssignalen einer Elektronik der Kamera geschwindigkeitsgeregelt ist und somit beispielsweise durch eine Blendensteuerung der Kamera angesteuert ist.

Die Lagerung der wenigstens einen Scheibe in dem Halterahmen kann bei einer einfachen Ausführung über angefedert gelagerte Rollen erfolgen, an denen die rotierende Scheibe in ihrem Rand abrollt.

Die äußere geometrische Gestaltung des Halterahmens richtet sich nach dem Kompendium und dessen Filterhaltemodulen, mit denen die Linsenvorsatzvorrichtung nach der Erfindung kompatibel sein soll.

Wenn der Halterahmen der Scheibe mit entsprechenden Verbindungseinrichtungen ausgebildet ist, welche die einzelnen Module des Kompendium zur Verbindung untereinander aufweisen, kann die Linsenvorsatzvorrichtung nach der Erfindung mit ihrem Halterahmen selbst ein in das Kompendium an beliebiger Stelle ein- bzw. ansetzbares Modul darstellen.

Die Verbindungseinrichtungen zur Verbindung mit anderen Modulen des Kompendium können dabei Schwalbenschwanzeinrichtungen auf der Vorderseite und/oder Rückseite des Halterahmens darstellen, mittels denen Schiebe-Klick-Verbindungen mit dem angrenzenden Modul herstellbar sind.

Weitere Vorteile und vorteilhafte Ausgestaltungen ergeben sich aus der Zeichnung, der Beschreibung und den Patentansprüchen.

### KURZE BESCHREIBUNG DER ZEICHNUNG

Drei Ausführungsbeispiele einer erfindungsgemäßen Linsenvorsatzvorrichtung, welche kompatibel zu einem Filterhaltemodul eines Kompendiums herkömmlicher Bauart ausgebildet sind, sind in der Zeichnung gezeigt und in der nachfolgenden Beschreibung näher erläutert.

Dabei zeigen:
- Fig. 1: eine Explosionsdarstellung einer ersten Ausführung einer als Linsenschutzvorrichtung ausgebildeten Linsenvorsatzvorrichtung;
- Fig. 2: eine Explosionsdarstellung einer zweiten Ausführung einer als Linsenschutzvorrichtung ausgebildeten Linsenvorsatzvorrichtung;
- Fig. 3: eine Rückansicht der Linsenvorsatzvorrichtung der Fig. 2 ohne rückwärtigen Deckel;
- Fig. 4: eine Rückansicht der Linsenvorsatzvorrichtung der Fig. 2 mit rückwärtigem Deckel;
- Fig. 5: eine Frontansicht der Linsenvorsatzvorrichtung der Fig. 2;
- Fig. 6: eine Seitenansicht der Linsenvorsatzvorrichtung der Fig. 2; und
- Fig. 7: eine Explosionsdarstellung einer dritten Ausführung einer als Linsenschutzvorrichtung ausgebildeten Linsenvorsatzvorrichtung;

### AUSFÜHRUNGSFORMEN DER ERFINDUNG

In den Figuren der Zeichnung ist jeweils eine Linsenvorsatzvorrichtung 1, 1', 1" gezeigt, welche als Linsenschutzvorrichtung zum Schutz einer Kameralinse und dieser vorgesetzter, Bildeigenschaften beeinflussender Bauelemente vor anfliegenden Teilchen wie Regen, Schnee oder Schmutz dient.

Die Linsenvorsatzvorrichtung 1, 1', 1" ist dabei als Einsatz eines Trägers für Bildeigenschaften beeinflussende Bauelemente vor einer Kameralinse einer Filmkamera ausgebildet, wobei dieser Träger ein konventionelles, modular aufgebautes Produktionskompendium z. B. gemäß den eingangs als Stand der Technik zitierten Kompendien bildet.

Bei der Darstellung der Ausführungen der Linsenvorsatzvorrichtung 1, 1', 1" wurden für jeweils funktionsgleiche Bauelemente aus Gründen der Übersichtlichkeit gleiche Bezugszeichen verwendet.

Die Linsenvorsatzvorrichtung 1, 1' weist jeweils eine als Deckglasscheibe ausgebildete Scheibe 2 auf, welche in einem Halterahmen 4 rotierbar gelagert ist.

Der Halterahmen 4 ist hinsichtlich seiner äußeren Abmessungen und Geometrie an das Filterhaltemodul des Kompendiums angepasst, in das der Halterahmen 4 an Stelle einer vorderen Filterbühne einsetzbar ist.

Im montierten Zustand ist der Halterahmen 4 auf der kameraabgewandten Frontseite durch einen vorderen Deckel 6 und auf der rückwärtigen, kamerazugewandten Seite mit einem rückwärtigen Deckel 8, welche jeweils eine der Größe der Scheibe 2 angepasste kreisrunde Aussparung aufweisen, abgedeckt.

Die Montage der Deckel 6 und 8 an dem Halterahmen 4 erfolgt vorliegend auf einfache Weise über Schraubverbindungen mittels Senkschrauben 10.

Im eingebauten Zustand ist der Rand der Scheibe 2 eingefasst von vier Führungsrädern 12, welche an dem Halterahmen 4 in Radialrichtung federnd gelagert sind und jeweils eine Radnabe 14 aufweisen, welche über eine Lagerschraube 16 und zwei als Rillenkugellager ausgebildete Bundlager 18, 19 an dem Halterahmen 4 angeordnet ist.

Die oberen Führungsräder werden bei den gezeigten Ausführungen manuell eingestellt. Hierzu können die Lagerschrauben 16 gelockert werden und die Führungsräder 12 entsprechend an die Scheibe 2 geführt werden. Die unteren Führungsräder sind vorliegend nicht einstellbar an dem Halterahmen 4 festgelegt und ebenfalls zweifach über als Rillenkugellager ausgebildete Bundlager 18, 19 an dem Halterahmen 4 gelagert.

Neben den vier mit gleichem Abstand zueinander angeordneten und jeweils einer Ecke des Halterahmens 4 zugeordneten Führungsrädern 12 greift im mittigen oberen Bereich innerhalb des Halterahmens 4 ein Antriebsrad 20, welches mit einem elektromotorischen Antrieb 22 verbunden ist, an dem Rand der Scheibe 2 an.

Die Verbindung zwischen dem Elektromotor 22 und dem Antriebsrad 20 erfolgt über eine obere Mitnehmerplatte 23 und eine untere Mitnehmerplatte 25.

Der elektromotorische Antrieb 22 wird vorliegend durch einen DC-Kleinstmotor gebildet, welcher an seinem Umfang durch eine entsprechende Öffnung einer Trägerplatine 24 geführt und in einem eine Kappe darstellenden Gehäuse 26 aufgenommen ist, welches oberhalb des rückwärtigen Deckels 8 eine rückwärtige Abdeckung des Halterahmens 4 bildet. Der Antrieb 22, welcher des Weiteren in Radialrichtung mittels nicht dargestellter Federn federnd gelagert ist, ist somit in den Halterahmen 4 integriert.

Zur Bedienung des Elektromotors 22 ein gefedert gelagerter Drücker 27 vorgesehen. Des Weiteren ist ein als Bremse dienenden Schutzring 28 an der rückwärtigen Seite des Elektromotors 22 angeordnet, über den das mit dem Elektromotor 22 verbundene Antriebsrad 20 festgehalten werden kann, so dass die Scheibe 2 arretiert wird. Ein solcher Betriebszustand ist beispielsweise zum Reinigen der Scheibe 2 vorteilhaft.

Die Stromversorgung des elektromotorischen Antriebs 22, welcher vorliegend pulsweitenmoduliert ist, erfolgt auf einfache Weise über eine Kabelverbindung zu der Kamera und deren Energieversorgung.

Die Montage der vorgestellten Linsenvorsatzvorrichtung 1 gestaltet sich mit dem gezeigten Schraubverbindungen sehr einfach. Entsprechend einfach ist auch ein Wechsel der Scheibe 2, indem einfach der hintere Deckel 8 entfernt wird, so dass der Halterahmen 4 mit der geführten Scheibe 2 von dem Motorgehäuse 26 einfach gelöst werden kann und durch einen anderen Halterahmen mit einer anderen Scheibe ausgetauscht werden kann.

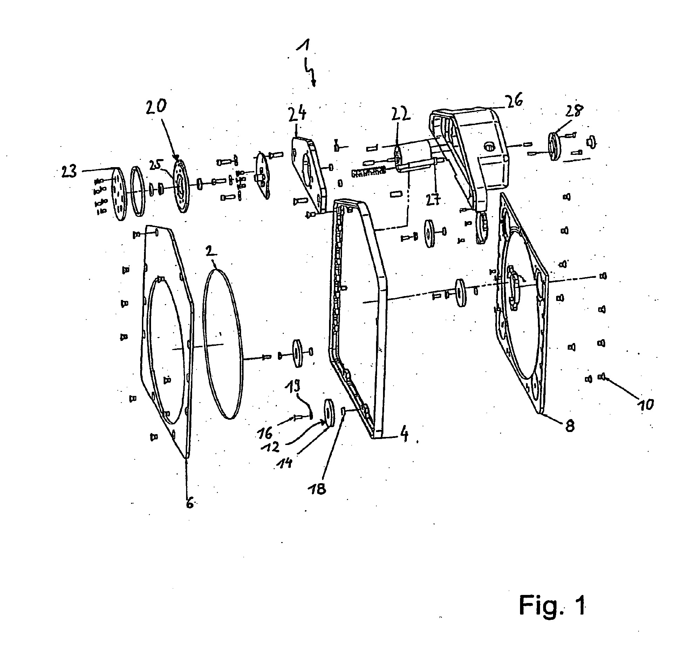

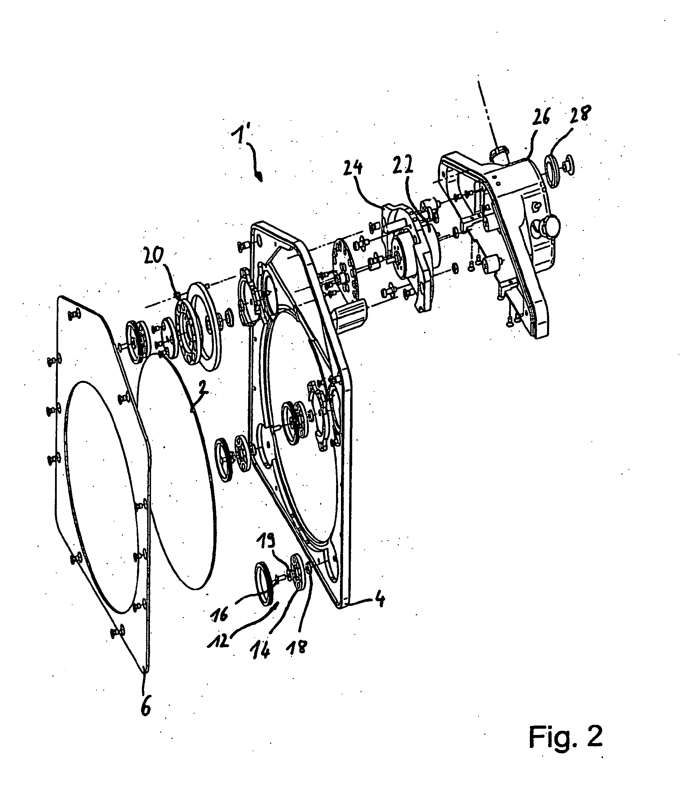

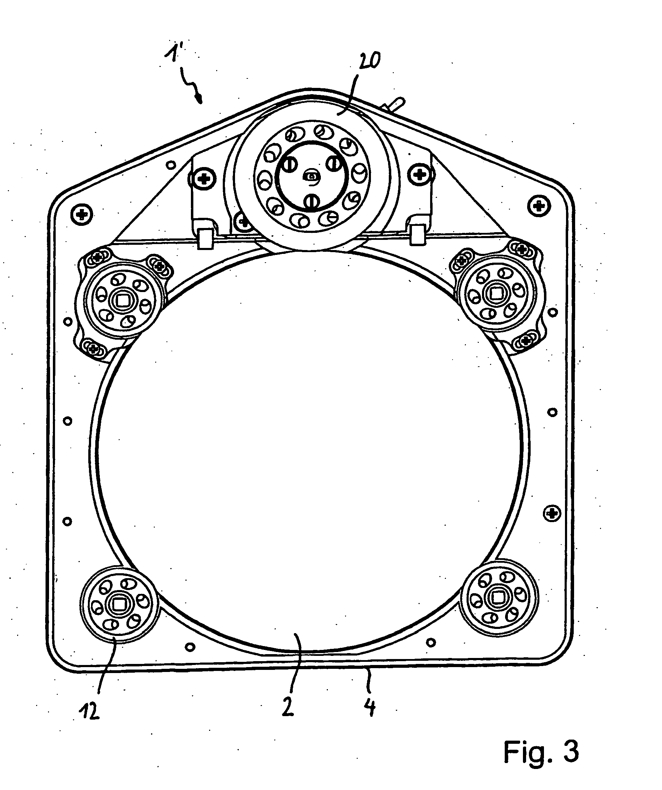

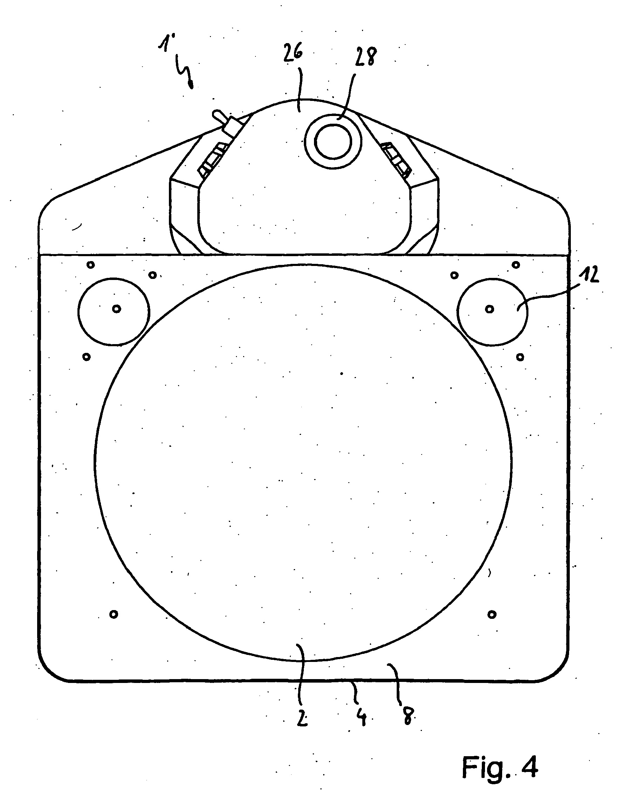

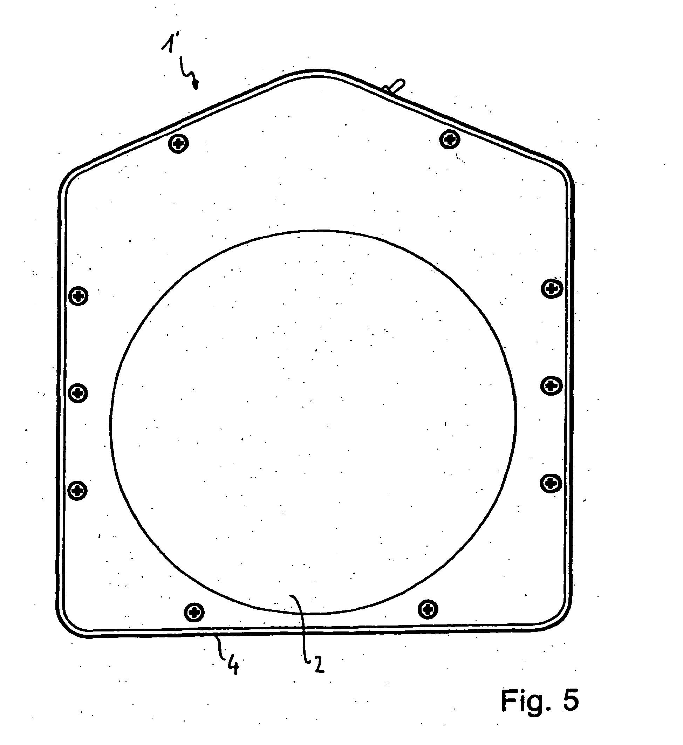

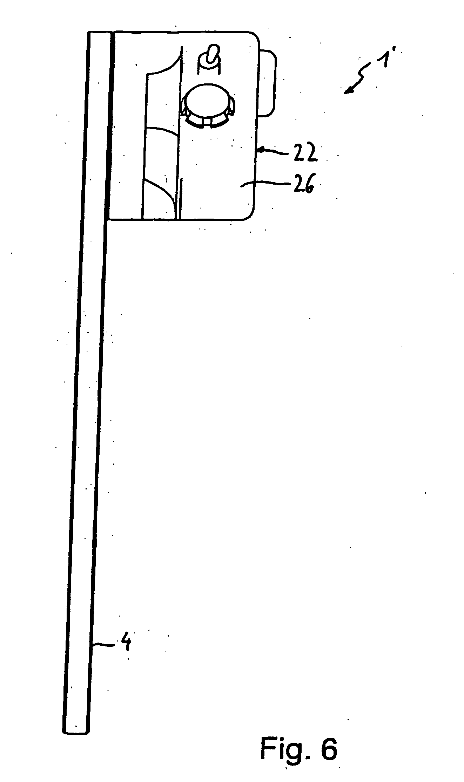

Die Ausführung gemäß Fig. 2 bis Fig. 6 unterscheidet sich von de Ausführung nach Fig. 1 in der Gehäuse- bzw. Halterahmengestaltung, wobei die Breite des Motorgehäuses 26 bei der zweiten Ausführung schmäler ist.

Zudem ist für den Rotor des Elektromotor 22 eine Dreipunktlagerung mit Puffern 30 vorgesehen. Die Puffer 30 federn die Trägerplatine 24, welche den Elektromotor 22 aufnimmt, so dass eine Vibrationsdämpfung des Elektromotors 22 erreicht wird.

Dadurch wird wiederum das Antriebsrad 20 für die Scheibe 2 gefedert, womit Rundlaufungenauigkeiten bzw. Ungenauigkeiten des gesamten Systems aus Elektromotor 22, Scheibe 2 und den Führungsrädern 12, von denen hier die oberen Führungsräder eine einen Toleranzausgleich erlaubende Exzenterlagerung aufweisen, ausgeglichen werden.

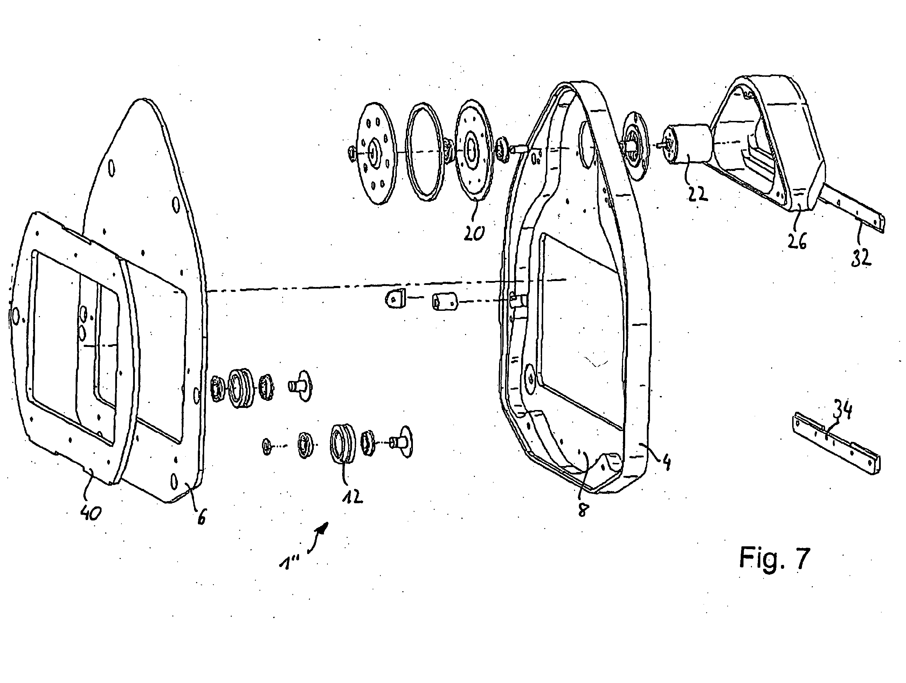

Bei der dritten Ausführung nach Fig. 7, bei der die Scheibe 2 nicht gezeigt ist, ist der Halterahmen 4 der Scheibe 2 mit Verbindungseinrichtungen 24, 36 ausgebildet, welche andere Module 40 des Kompendium zur Verbindung untereinander aufweisen. Somit ist die Linsenvorsatzvorrichtung 1" selbst ein an beliebiger Stelle einsetzbares, das Kompendium bildendes Modul.

Die Verbindungseinrichtungen sind vorliegend als Schwalbenschwanzeinrichtungen 34, 36 ausgebildet.

Wenngleich die gezeigten Ausführungen eine Deckglasscheibe 2 aufweisen, ist bei entsprechender Adaption des Antriebs mit dem gezeigten Rahmen auch die Verwendung einer eine optische Wirkung erzielenden Scheibe möglich.

## Patentansprüche

1. Linsenvorsatzvorrichtung, insbesondere Linsenschutzvorrichtung zum Schutz vor anfliegenden Teilchen wie Regen oder Schnee, für Kameras mit einem Halterahmen (4) und einer durch einen Antrieb in Rotation versetzbaren transparenten Scheibe (2), wobei die Scheibe (2) in dem Halterahmen (4) angeordnet ist, welcher zum Einsatz in einen Träger für Bildeigenschaften beeinflussende Bauelemente vor einer Kameralinse ausgebildet ist,
**dadurch gekennzeichnet,**
**dass** der Halterahmen (4) zum Einsatz in einen Filterhalter eines Kompendiums ausgebildet ist.

2. Linsenvorsatzvorrichtung, insbesondere Linsenschutzvorrichtung zum Schutz vor anfliegenden Teilchen wie Regen oder Schnee, für Kameras mit einem Halterahmen (4) und einer durch einen Antrieb in Rotation versetzbaren transparenten Scheibe (2), wobei die Scheibe (2) in dem Halterahmen (4) angeordnet ist, welcher als ein Einsatz eines Trägers für Bildeigenschaften beeinflussende Bauelemente vor einer Kameralinse ausgebildet ist,
**dadurch gekennzeichnet,**
**dass** der Halterahmen (4) als Modul eines modular aufgebauten Kompendiums ausgebildet ist und Verbindungseinrichtungen (32, 34) aufweist, welche die Module des Kompendiums zur Verbindung untereinander aufweisen, so dass der Halterahmen (4) mit wenigstens einem anderen Modul (40) des Kompendiums an seiner Vorderseite oder Rückseite verbindbar ist.

3. Linsenvorsatzvorrichtung nach einem der Ansprüche 1 bis 2,
**dadurch gekennzeichnet,**
**dass** ein elektromechanischer Antrieb (22), welcher vorzugsweise die Scheibe (2) mittels eines an deren Rand ablaufenden Antriebsrads (20) antreibt, in den Halterahmen (4) integriert ist.

4. Linsenvorsatzvorrichtung nach Anspruch 3,
**dadurch gekennzeichnet,**
**dass** der elektromechanischer Antrieb (22) gefedert gelagert ist.

5. Linsenvorsatzvorrichtung nach einem der Ansprüche 1 bis 4,
**dadurch gekennzeichnet,**
**dass** die Scheibe (2) als eine neutrale Deckglasscheibe ausgebildet ist

6. Linsenvorsatzvorrichtung nach einem der Ansprüche 1 bis 4,
d**adurch gekennzeichnet**,
dass die Scheibe als eine eine optische Wirkung hervorrufende Scheibe ausgebildet ist.

7. Linsenvorsatzvorrichtung nach Anspruch 6,
**dadurch gekennzeichnet,**
**dass** die Scheibe als ein optischer Filter ausgebildet ist.

8. Linsenvorsatzvorrichtung nach Anspruch 7,
**dadurch gekennzeichnet,**
**dass** die Scheibe als ein Polarisationsfilter ausgebildet ist.

9. Linsenvorsatzvorrichtung nach einem der Ansprüche 1 bis 8,
**dadurch gekennzeichnet,**
**dass** zwei oder mehr Scheiben in dem Halterahmen (4) angeordnet sind.

10. Linsenvorsatzvorrichtung nach Anspruch 9,
**dadurch gekennzeichnet,**
**dass** zwei als Polarisationsfilter ausgebildete Scheiben vorgesehen sind, welche durch einen der jeweiligen Scheibe zugeordneten Antrieb in entgegengesetzte Richtungen rotierbar sind.

11. Linsenvorsatzvorrichtung nach einem der Ansprüche 1 bis 10,
**dadurch gekennzeichnet,**
**dass** die Scheibe (2) mittels vorzugsweise vier gleichmäßig über deren Umfang verteilter, wenigstens teilweise einstellbarer Führungsräder (12) an dem Halterahmen (4) gelagert ist.

## Claims

1. A lens attachment device, in particular a lens protection device for protection from approaching particles such as rain or snow, for cameras having a holding frame (4) and a transparent disk (2) which can be set into rotation, wherein the disk (2) is arranged in the holding frame (4) which is configured for inserting in a carrier for components influencing image properties in front of a camera lens,
**characterized in that**
the holding frame (4) is configured for inserting in a filter holder of a matte box.

2. A lens attachment device, in particular a lens protection device for protection from approaching particles such as rain or snow, for cameras having a holding frame (4) and a transparent disk (2) which can be set into rotation, wherein the disk (2) is arranged in the holding frame (4) which is configured as an insert of a carrier for components influencing image properties in front of a camera lens,
**characterized in that**
the holding frame (4) is configured as a module of a matte box having a modular structure; and has connection devices (32, 34) which the modules of the matte box are comprising for connection to at least one other module (40) of the matte box, so that the holding frame (4) can be connected, on its front or rear side, with at least one other module (40) of the matte box.

3. A lens attachment device in accordance with one of the claims 1 or 2, **characterized in that** an electromechanical drive (22), which preferably drives the disk (2) by means of a drive wheel (20) running off on the rim of said disk, is integrated into the holding frame (4).

4. A lens attachment device in accordance with claim 3, **characterized in that** the electromechanical drive (22) is resiliently supported.

5. A lens attachment device in accordance with one of the claims 1 to 4, **characterized in that** the disk (2) is configured as a neutral cover glass disk.

6. A lens attachment device in accordance with one of the claims 1 to 4, **characterized in that** the disk is configured as a disk causing an optical effect.

7. A lens attachment device in accordance with claim 6, **characterized in that** the disk is configured as an optical filter.

8. A lens attachment device in accordance with claim 7, **characterized in that** the disk is configured as a polarization filter.

9. A lens attachment device in accordance with one of the claims 1 to 8, **characterized in that** two or more disks are arranged in the holding frame (4).

10. A lens attachment device in accordance with claim 9, **characterized in that** two disks configured as polarization filters are provided which are rotatable in opposite directions by a drive associated with the respective disk.

11. A lens attachment device in accordance with claim 10, **characterized in that** the disk (2) is supported at the holding frame (4) by means of preferably four guide wheels (12) distributed uniformly over the periphery of said disk and being at least partially adjustable.

## Revendications

1. Dispositif adapteur de lentille, notamment dispositif pour la protection d'une lentille contre des particules s'approchant, comme de la pluie ou de la neige, pour des caméras présentant un cadre de support (4) et un disque transparent (2) qui peut être mis en rotation par un entraînement, ledit disque (2) étant disposé dans le cadre de support (4) qui est adapté à l'insertion dans un support pour des composants qui influencent les caractéristiques d'image devant une lentille de caméra,
**caractérisé en ce que**
le cadre de support (4) est adapté à l'insertion dans un porte-filtre d'un compendium.

2. Dispositif adapteur de lentille, notamment dispositif pour la protection d'une lentille contre des particules s'approchant, comme de la pluie ou de la neige, pour des caméras présentant un cadre de support (4) et un disque transparent (2) qui peut être mis en rotation par un entraînement, ledit disque (2) étant disposé dans le cadre de support (4) qui est réalisé en tant qu'insertion d'un support pour des composants qui influencent les caractéristiques d'image devant une lentille de caméra,
**caractérisé en ce que**
le cadre de support (4) est réalisé en tant que module d'un compendium présentant une structure modulaire, et **en ce qu'**il présente des moyens de liaison (32, 34) que les modules du compendium comprennent pour les lier entre eux, de manière à pouvoir relier le cadre de support (4) par sa face avant ou sa face arrière avec au moins un autre module (40) du compendium.

3. Dispositif adapteur de lentille selon l'une quelconque des revendications 1 ou 2,
**caractérisé en ce qu'**un entraînement électromécanique (22) est intégré dans le cadre de support (4), ledit entraînement électromécanique (22) entraînant de préférence le disque (2) au moyen d'une roue entraîneuse (20) roulant sur le bord dudit disque.

4. Dispositif adapteur de lentille selon la revendication 3, **caractérisé en ce que** ledit entraînement électromécanique (22) est supporté de manière élastique.

5. Dispositif adapteur de lentille selon l'une quelconque des revendications 1 à 4, **caractérisé en ce que** le disque (2) est réalisé en tant que lamelle couvre-objet neutre.

6. Dispositif adapteur de lentille selon l'une quelconque des revendications 1 à 4, **caractérisé en ce que** le disque est réalisé en tant que disque produisant un effet optique.

7. Dispositif adapteur de lentille selon la revendication 6, **caractérisé en ce que** le disque est réalisé en tant que filtre optique.

8. Dispositif adapteur de lentille selon la revendication 7, **caractérisé en ce que** le disque est réalisé en tant que filtre polarisateur.

9. Dispositif adapteur de lentille selon l'une quelconque des revendications 1 à 8, **caractérisé en ce que** deux ou plus de deux disques sont disposés dans le cadre de support (4).

10. Dispositif adapteur de lentille selon la revendication 9, **caractérisé en ce que** l'on prévoit deux disques réalisés en tant que filtres polarisateurs qui peuvent être entraînés en rotation dans des directions opposées par un entraînement associé avec le disque respectif.

11. Dispositif adapteur de lentille selon l'une quelconque des revendications 1 à 10, **caractérisé en ce que**
le disque (2) est supporté sur le cadre de support (4) par le biais de roues de guidage (12), dont il y a de préférence quatre, distribuées de manière uniforme sur la périphérie dudit disque et étant au moins partiellement réglables.
